# FASCICULE DE BREVET EUROPEEN

(11) **EP 0 547 961 B1**
(45) Date de publication et mention de la délivrance du brevet: **27.03.1996**
(21) Numéro de dépôt: 92403418.4
(22) Date de dépôt: 15.12.1992
(51) Int. Cl.: G01V 11/00, E21B 47/12

(54) **Système de surveillance active ou passive d'un gisement souterrain installé a poste fixe**
Aktive oder passive Überwachungsanordnung für unterirdische Lagerstätte mittels fester Stationen
Active or passive surveillance system for underground formation by means of fixed stations

(30) Priorité: 16.12.1991 FR 9115691; 23.03.1992 FR 9203575
(43) Date de publication de la demande: 23.06.1993
(73) Titulaire: INSTITUT FRANCAIS DU PETROLE, F-92506 Rueil-Malmaison Cédex (FR)
(72) Inventeur: Staron, Philippe, F-91540 Mennecy (FR); Cretin, Jacques, F-78150 Le Chesnay (FR); Beauducel, Claude, F-60119 Henonville (FR); Lepage, Thierry, F-78590 Noisy le Roi (FR)

(56) Documents cités:
- EP-A- 0 228 932
- FR-A- 2 613 496
- FR-A- 2 642 849
- GB-A- 2 138 249
- US-A- 4 162 400
- US-A- 4 415 895
- US-A- 4 474 250

## Description

L'invention a pour objet un système de surveillance active ou passive d'un gisement souterrain traversé par un ou plusieurs puits au moyen de récepteurs installés à poste fixe dans un ou plusieurs puits traversant ce gisement.

Le système selon l'invention convient en particulier pour la surveillance active ou passive d'une zone réservoir recélant des effluents pétroliers ou d'un réservoir de gaz souterrain.

Par surveillance active ou passive, on entend toute opération permettant de préciser par analyse de signaux au moyen des récepteurs, la nature des couches traversées par les puits et/ou leur configuration, les signaux acoustiques ou sismiques émis spontanément par une formation mise en production ou bien la mesure dans les puits de paramètres d'état significatifs, et la centralisation de données recueillies par les différents récepteurs.

Les données peuvent être recueillies par des capteurs acoustiques ou sismiques tels que des géophones, ou des hydrophones dans le cadre d'opérations de prospection sismique d'un gisement pétrolier avec une source sismique disposée en surface ou dans un autre puits ou bien encore obtenues par des relevés des signaux acoustiques produits par le gisement au cours de sa durée d'exploitation. Les données à transmettre en surface peuvent être aussi des signaux reçus par différents capteurs répartis le long d'une portion de puits, ces signaux provenant de discontinuités de la formation en réponse à l'émission dans celle-ci d'ondes acoustiques ou sismiques. La surveillance d'une formation peut encore s'exercer en transmettant en surface différents paramètres mesurés dans le puits des températures, pressions, débits etc.

On connaît des méthodes pour étudier ou surveiller l'évolution d'un gisement pétrolifère par exemple qui comportent le positionnement de plusieurs capteurs à intervalles déterminés le long de puits ou forages et leur couplage avec la paroi de celui-ci, le déclenchement d'une source sismique en surface ou dans un puits, le même que celui où les capteurs sont installés ou encore un autre, et la transmission à une station centrale d'enregistrement en surface, des signaux captés en réponse aux ondes émises, de manière à localiser par des traitements conventionnels la position des réflecteurs souterrains. On obtient des résultats significatifs en effectuant un filtrage spatial des signaux captés. On déplace plusieurs capteurs disposés dans une ou plusieurs sondes, successivement en un nombre important d'emplacements différents le long du puits et on combine les enregistrements des signaux captés comme il est bien connu des spécialistes.

La réalisation de telles opérations sismiques requiert généralement de mettre hors service provisoirement le ou les puits contenant des équipements de production et, ce qui est très pénalisant, d'ôter les équipements de production pour placer les sondes d'écoute et les ancrer contre leurs tubes de cuvelage.

Par les brevets FR 2 593 292 et 2 642 849 du demandeur, on connaît une technique pour éviter l'indisponibilité d'un puits qui consiste essentiellement à installer un grand nombre de capteurs à l'extérieur de tubes destinés à cuveler un ou plusieurs puits et à relier ces capteurs par des lignes de transmission à une station de commande et d'enregistrement en surface. Le tube de cuvelage (casing) étant mis en place, les capteurs qui se retrouvent dans l'espace annulaire autour de lui, sont couplés avec les formations environnant le puits par le ciment de scellement. Les capteurs sont généralement disposés dans des unités de réception fixées à l'extérieur du tube de cuvelage, emboîtées dans des logements rapportés à la paroi extérieure de certaines de ses sections ou disposées dans des raccords intermédiaires spécialement aménagés. Ces unités de réception comportent des logements pour des géophones et des modules électroniques permettant l'adaptation des signaux reçus par les géophones avant leur transmission à une station de surface par des câbles remontant jusqu'à la surface. Cette technique convient quand le nombre d'unités de réception est limité du fait que chacune d'elles doit être reliée séparément avec une installation de surface.

Lorsqu'un puits est équipé pour la production pétrolière, il est connu aussi de placer des capteurs dans l'espace annulaire entre le tube de cuvelage et le tube de production, comme décrit par exemple dans le brevet FR 2 656 034 du demandeur et de les plaquer contre le tube de cuvelage de façon à obtenir un bon couplage acoustique avec les formations environnant le puits.

Dans la demande de brevet FR-A-2 656 034 (EP-A-0 546 892) du demandeur, est décrit un procédé pour relier entre elles différentes unités de réception, notamment des sondes sismiques, qui consiste essentiellement à disposer entre elles des canalisations hydrauliques étanches résistant à la pression qui règne dans le puits, de façon à délimiter un espace commun isolé du milieu extérieur et à faire passer des conducteurs électriques de liaison à l'intérieur de ces canalisations.

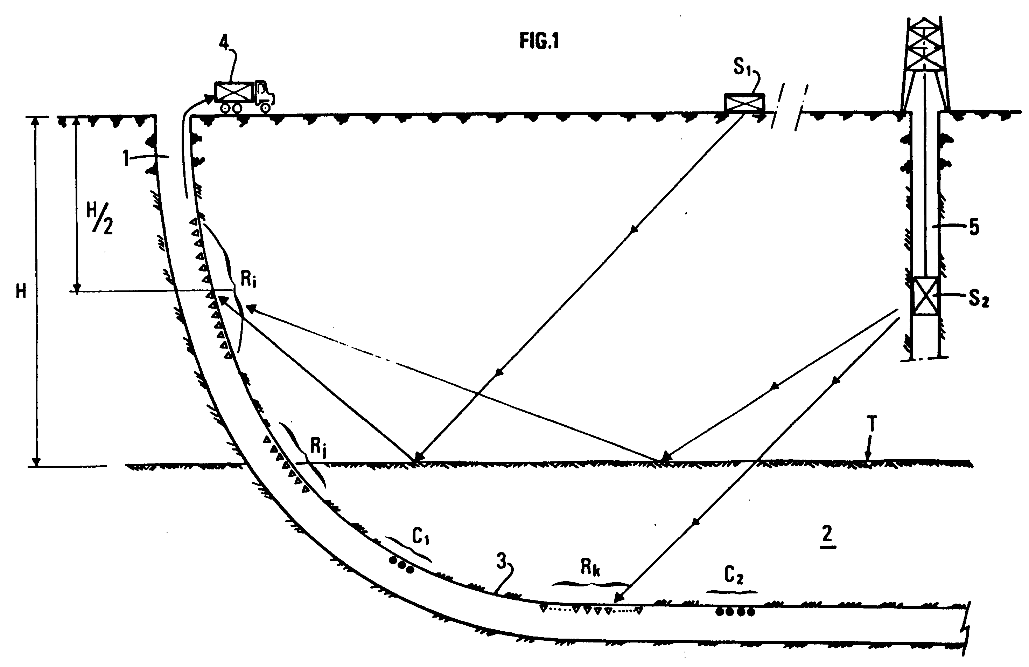

Quand on doit équiper un ou plusieurs puits avec des capteurs placés derrière un tube de cuvelage par exemple et destinés à être noyés de façon définitive dans du ciment, on veille à mettre en place des capteurs de type très divers susceptibles de recueillir un grand nombre de données de nature ou caractéristiques différentes, de façon à mieux analyser et suivre l'évolution de la zone traversée. Comme on le précisera dans le courant de la description, en relation avec la Fig.1 notamment, on a besoin, notamment pour les applications simiques avec une source sismique disposée en surface ou dans un autre puits par exemple, de placer des capteurs tels que des géophones permettant de recevoir des ondes sismiques ou leurs composantes suivant plusieurs axes, en une pluralité de niveaux de profondeur différents, dans une gamme de fréquence limitée au plus à 1000Hz ou 1500Hz. Pour des applications de surveillance passive de l'évolution d'une zone de production, on a besoin de plusieurs capteurs tri-axiaux placés dans le puits vers le toit du gisement ou réservoir et capables de recevoir des signaux dans une bande de fréquence plus large que pour les applications précédentes. On cherche à capter ainsi l'activité sismique ou acoustique prenant naissance dans le gisement durant sa mise en production. La bande passante utile pour cette surveillance est généralement plus large que dans le cas précédent. D'autres capteurs peuvent être placés dans le puits dans sa partie traversant le gisement pour faire de la tomographie avec une source sismique disposée dans un autre puits. Il est souvent utile aussi de placer dans le puits au niveau des zones de production, des capteurs que l'on désignera dans la suite du texte par capteurs d'état pour mesurer différents paramètres thermodynamiques : pression, température ou des paramètres tels que des débits, mesurés par différents instruments etc.

Le mode de transmission à une installation de surface des signaux délivrés par chacun de ces types de capteur peut être différent. Pour les opérations d'écoute passive, les capteurs doivent être connectés en permanence ou quasi-permanence à l'installation de surface de façon que les signaux significatifs captés, à caractère souvent aléatoire, puissent être transmis à tout moment. La connexion à l'installation de surface, des capteurs utilisés pour réaliser des cycles d'enregistrement sismique provoqués, n'est nécessaire que durant les campagnes de prospection sismique active et celà pendant des intervalles de temps de quelques secondes à chaque cycle généralement, où l'on doit interrompre l'écoute permanente.

La connexion de capteurs d'état placés dans la zone de production pour mesurer des paramètres tels que des températures ou des pressions, peut être aussi permanente ou quasi-permanente. Par contre leur fréquence d'interrogation peut être beaucoup plus faible du fait que l'évolution des paramètres mesurés est généralement lente.

Il faut que le système de transmission mis en place s'accommode de modes de transfert de données très variés. Le transfert à l'installation de surface des données obtenues au cours d'opérations sismiques actives ou passives, est effectuée généralement sous une forme numérisée codée. Dans les phases d'écoute passive par exemple le débit doit être suffisant pour transmettre en temps réel les signaux provenant de plusieurs capteurs disposés respectivement à des profondeurs différentes, de façon à apprécier correctement la direction d'où provient tout ébranlement acoustique et sa distance d'émission. Le débit nécessaire pour leur transmission peut atteindre dans la pratique 1 Mbits/s. Dans les applications de prospection sismique provoquée réalisées avec un nombre important de capteurs le débit nécessaire peut excéder largement cette valeur. Pour d'autres modes de transmission, le débit requis est nettement différent.

Nombre de capteurs d'état traduisent les paramètres qu'ils mesurent sous une forme analogique, un courant d'intensité proportionnelle par exemple, qu'il importe de pouvoir transmettre en surface.

Le système de transmission qu'il faut mettre en place doit donc pour traiter des transferts de données aussi variées, être particulièrement souple. Comme il est installé à poste fixe et donc non récupérable dans nombre de cas, et pour des opérations de prospection et de surveillance souvent de longue durée, il faut qu'il soit relativement simple, peu onéreux et fiable. Son agencement doit être étudié aussi pour qu'une éventuelle défaillance localisée ne mette pas en cause la fiabilité d'ensemble. En outre, surtout quand le nombre d'appareils divers répartis le long du puits est important, il importe que la consommation électrique permanente de chacun d'eux soit modérée pour rester dans les limites de tension et d'intensité supportables par les câbles de transmission généralement employés dans les puits.

La présente invention a pour objet de proposer un système de surveillance d'un gisement souterrain, ce système étant propre à résoudre le problème technique posé par des opérations d'exploration et de surveillance à grande échelle d'une zone du sous-sol, sans pour autant rendre ces puits indisponibles ni demander non plus une modification importante des autres équipements utilisés dans le même temps dans ces puits.

Il comporte des moyens de liaison incluant au moins un câble de liaison et une station de surface pouvant être connectée audit câble.

Il est caractérisé en ce qu'il comporte au moins un ensemble d'intervention disposé à poste fixe dans un puits comprenant un module électronique de veille relié en permanence aux moyens de liaison et pourvu de moyens de décodage de signaux d'adresse, un module utilisateur et des moyens de commutation commandés par les moyens de décodage, pour relier par intermittence le module utilisateur auxdits moyens de liaison.

Les moyens de liaison comportent par exemple au moins une ligne conductrice pour le transfert de signaux de commande vers le module de veille de chaque ensemble d'intervention ou encore par exemple au moins une voie de transfert optique pour relier le module utilisateur de chaque ensemble d'intervention à la station de surface. Cette voie étant associée à des moyens de transmission et de couplage bi-directionnels de signaux entre chaque ensemble d'intervention et ladite station.

Suivant un mode de mise en oeuvre, l'invention comporte une station de surface connectée aux moyens de liaison et comprenant au moins des moyens d'alimentation électrique du module de veille de chaque ensemble d'intervention dans le puits et des moyens d'enregistrement de signaux.

Cette station de surface comprend par exemple un processeur de commande, des moyens d'application d'énergie électrique sur des conducteurs d'alimentation électrique des moyens de liaison et d'application de signaux d'adresse pour activer un module utiliseur et lui allouer au moins une voie de transmission de signaux, et au moins une unité spécialisée pour communiquer par ces voies de transmission avec le module utilisateur activé.

Par les connexions sélectives définies ci-dessus, on peut réduire l'équipement électronique en veille permanente et donc on peut alimenter de façon permanente par un même câble, un plus grand nombre d'ensembles d'intervention. De même, les moyens de commutation permettent pour certains modes de branchement, de maintenir la continuité des lignes (conducteurs électriques) d'alimentation électrique et de transmission des signaux sur toute leur longueur tant que l'un des modules utilisateurs n'est pas désigné par un adressage sélectif. La combinaison de moyens et leur configuration permet d'obtenir un système simple, fiable et relativement peu onéreux. Par le biais des unités spécialisées de la station de surface, le système selon l'invention peut piloter plusieurs dispositifs d'intervention de nature très différente et leur allouer de façon coordonnée les moyens de liaison pour leurs échanges avec ladite station.

On peut ainsi installer un équipement important de surveillance dans un puits et même équiper plusieurs puits quand l'importance d'un gisement le justifie.

Suivant un mode de réalisation, le module utilisateur d'au moins un ensemble d'intervention, comporte par exemple plusieurs récepteurs (capteurs d'ondes, éléments de mesure de signaux d'état, etc) et une unité d'adaptation et de transmission de données, laquelle comporte par exemple des moyens de multiplexage connectés aux récepteurs, et. des moyens de synchronisation pour engendrer un signal local d'horloge et piloter une numérisation de données produites par les moyens de réception associés ainsi que leur transmission, et la station de surface comporte une unité spécialisée comprenant des moyens automatiques de synchronisation pour restituer un signal d'horloge dont la phase est adaptée à celle dudit signal local d'horloge.

Suivant un mode de réalisation, les moyens de réception comportent plusieurs récepteurs et l'unité d'adaptation et de transmission.

Suivant un mode de réalisation, le module utilisateur d'au moins un ensemble d'intervention comporte au moins un récepteur pour mesurer un paramètre d'état et délivrant en réponse un courant proportionnel sur au moins une voie de transmission de signaux via lesdits moyens de commutation..

Dans le cas où un module utilisateur comporte plusieurs de ces récepteurs à courant proportionnel, le système selon l'invention inclut des moyens de sélection commandés par le module électronique de veille associé, pour connecter sélectivement l'un de ces récepteurs via les moyens de connexion.

Quand le module utilisateur d'au moins un ensemble d'intervention comporte au moins un récepteur pour mesurer un paramètre d'état et délivrant en réponse une tension électrique, on utilise une unité d'adaptation et de transmission comprenant par exemple un oscillateur commandé par tension dont la sortie est connectée sélectivement sur une voie de transmission par l'intermédiaire desdits moyens de connexion.

Les modules utilisateurs peuvent comporter des moyens mécaniques d'un type quelconque connectés sur commande aux moyens de liaison, tels que des moyens divers transducteurs d'énergie électrique (source sismique électro-mécanique électromagnétique piézo-électrique etc), des vannes commandées ou éventuellement des moteurs, le module spécialisé en surface comportant dans ce cas un bloc d'alimentation électrique adapté à l'application considérée.

Suivant un mode de réalisation, le système selon l'invention comporte au moins une source sismique et au moins un ensemble de récepteurs associé à une unité d'adaptation et de transmission pourvue d'une horloge locale, l'unité spécialisée communiquant avec elle, étant adaptée à déterminer la fréquence du signal d'horloge émis par les moyens de synchronisation locaux, et le processeur de la station de surface comporte des moyens pour déclencher cette source et des moyens pour associer aux données reçues du module d'utilisation, un signal indicatif des instants de déclenchement de ladite source.

Le système selon l'invention peut combiner par exemple au moins un premier ensemble de récepteurs acoustiques ou sismiques associé à une unité d'adaptation et de transmission et au moins un deuxième ensemble de capteurs d'état associé à une deuxième unité d'adaptation et de transmission, la station de surface comportant au moins deux unités spécialisées différentes pour communiquer respectivement avec lesdites unités d'adaptation et de transmission, ces unités spécialisées étant connectées au processeur par l'intermédiaire de circuits d'interface.

L'invention concerne aussi une méthode pour la surveillance active et/ou passive d'une zone de sous-sol traversée par au moins un forage, qui est caractérisée en ce qu'elle comporte :
- l'installation à poste fixe du système défini ci-dessus;
- l'allocation par la station de surface de conducteurs de transmission de signaux à un ensemble d'intervention par application de signaux de commande adressés au module électronique de veille associé sur des conducteurs de transmission de signaux de câble, et leur décodage par les moyens de décodage dans ledit module de veille;
- la commande par ce module de veille, des moyens de commutation permettant la connexion du module utilisateur; et
- le transfert de signaux reçus par l'ensemble d'intervention sous le contrôle du module utilisateur et suivant des modalités de transfert déterminées à une unité spécialisée de la station de surface, adaptée à recevoir ces signaux et à se conformer à toutes les modalités caractérisant le transfert.

D'autres caractéristiques et avantages du système et de la méthode selon l'invention apparaîtront mieux à la lecture de la description ci-après de modes de réalisation décrits à titre d'exemples non limitatifs, en se référant aux dessins annexés où :
- la Fig.1 montre une disposition d'appareils ou de récepteurs divers (ensembles d'intervention) que l'on peut placer dans un puits pour la surveillance active ou passive d'un gisement par exemple;
- la Fig.2 montre schématiquement des lignes de conducteurs électriques assurant les liaisons nécessaires entre des ensembles d'intervention et la station de surface;
- la Fig.3 montre un premier mode de branchement d'un module électronique de veille sur des lignes d'alimentation électrique;
- la Fig.4 montre un deuxième mode de branchement d'un module de veille sur des lignes d'alimentation électrique;
- la Fig.5 montre un mode d'alimentation électrique d'un module utilisateur;
- la Fig.6 montre schématiquement un module d'acquisition de signaux avec son bloc d'alimentation dans un module utilisateur comportant des ensembles de récepteurs;
- la Fig.7 montre schématiquement une variante du module d'acquisition de signaux de la Fig.6;
- la Fig.8 montre schématiquement un capteur d'état à courant proportionnel dans un module utilisateur;
- la Fig.9 montre schématiquement un mode de branchement de plusieurs capteurs d'état à courant proportionnel dans un même module utilisateur;
- la Fig.10 montre schématiquement un module pour la transmission à la station de surface, des mesures à variations lentes relevées par des capteurs d'état;
- la Fig.11 montre schématiquement la station de surface assurant la gestion des échanges avec les ensembles d'intervention;
- la Fig.12 montre un mode de réalisation où un câble multi-conducteurs est utilisé pour la connexion d'ensembles de réception de signaux par exemple;
- la Fig.13 montre un agencement de plusieurs boîtiers de récepteurs placés à l'extérieur d'un tube de cuvelage (casing) avec des canalisations hydrauliques par où transitent des liaison électriques entre eux et un module électronique associé;
- la Fig.14 montre un autre mode de réalisation comportant des moyens de transmission du type optique doublant une ligne conductrice pour le transfert de données depuis des modules utilisateurs jusqu'à la sation de surface;
- la Fig. 15 montre un autre mode de réalisation où la transmission des réponses des modules utilisateurs est toute entière assurée via un ou plusieurs canaux de transmission optique; et
- la Fig. 16 montre une variante du mode précédent avec des moyens de transmission optiques bi-directionnels pour le transfert des commandes et des données.

Sur la Fig.1, on a schématisé un puits 1 foré jusqu'au travers d'un gisement souterrain 2 recélant par exemple des effluents pétroliers. Le puits doit être muni d'un tube de cuvelage 3 jusqu'à une certaine profondeur, ce tube étant lié au formations environnantes par injection de ciment dans l'espace annulaire entre lui et le puits, comme il est décrit dans les brevets FR 2 593 292 et 2 642 849 précités.

Pour la surveillance du gisement traversé par des tels puits, il est souhaitable comme on l'a vu, de disposer de récepteurs capables de mesurer ou détecter des signaux de type très divers. Le toit T du réservoir se trouvant à une profondeur H, on met en place, à mi-profondeur H/2 par exemple, un ensemble Ri de géophones de préférence tri-axiaux, de façon à pouvoir mener à bien une exploration de type sismique. Une source S1 disposée en surface ou une source S2 disposée dans un autre puits, émet des ondes qui après réflexion sur les discontinuités du sous-sol, sont captées par les géophones de l'ensemble Ri, transmises à une station de surface 4 qui les enregistre et ensuite traitées pour obtenir des coupes sismiques représentatives. Pour ce type d'exploration, la bande passante des signaux reçus est généralement limitée à 1000 ou 1500 Hz. La durée de transmission des signaux sismiques captés suite à un ébranlement du terrain est relativement courte, de l'ordre d'une dizaine de secondes au plus.

Vers le toit du réservoir, on met en place par exemple un ensemble de capteurs Rj pour faire de l'écoute passive. Un ou plusieurs autres ensembles de réception Rk sont placés plus bas dans la partie du puits traversant le réservoir pour capter des ondes sismiques émises par une source sismique S2 placée dans un autre puits 5. Cet ensemble peut comporter par exemple plusieurs dizaines voire m^eme une ou plusieurs centaines de géophones mono-axes ou d'hydrophones répartis sur une longueur important du puits. Les émissions sismiques induites par l'activité de production, intervenant de façon aléatoire, il importe que les capteurs spécialisés de l'ensemble Rj soient connectés en permanence à la station 4 en surface sauf éventuellement pendant les intervalles de temps de durée très limitée où les récepteurs sismiques des ensembles Ri et Rk doivent être connectés.

On a représenté sur la Fig. 1 également deux ensembles de capteurs d'état C1, C2 permettant de relever des températures, des pressions etc. Il s'agit par exemple de capteurs d'un type connu dit à courant proportionnel. Des capteurs de ce type, quand on leur applique une tension d'alimentation déterminée, absorbent des courants proportionels au paramètre mesurés, qu'il s'agit de transmettre à la station de surface 4.

L'ensemble de transmission qui va être décrit ci-après peut s'adapter à chacun des types de récepteurs ci-dessus indiqués, avec leurs spécifications propres de connexion, leurs modes de transmission, leurs fréquences de codage et leurs débits de transfert de données propres.

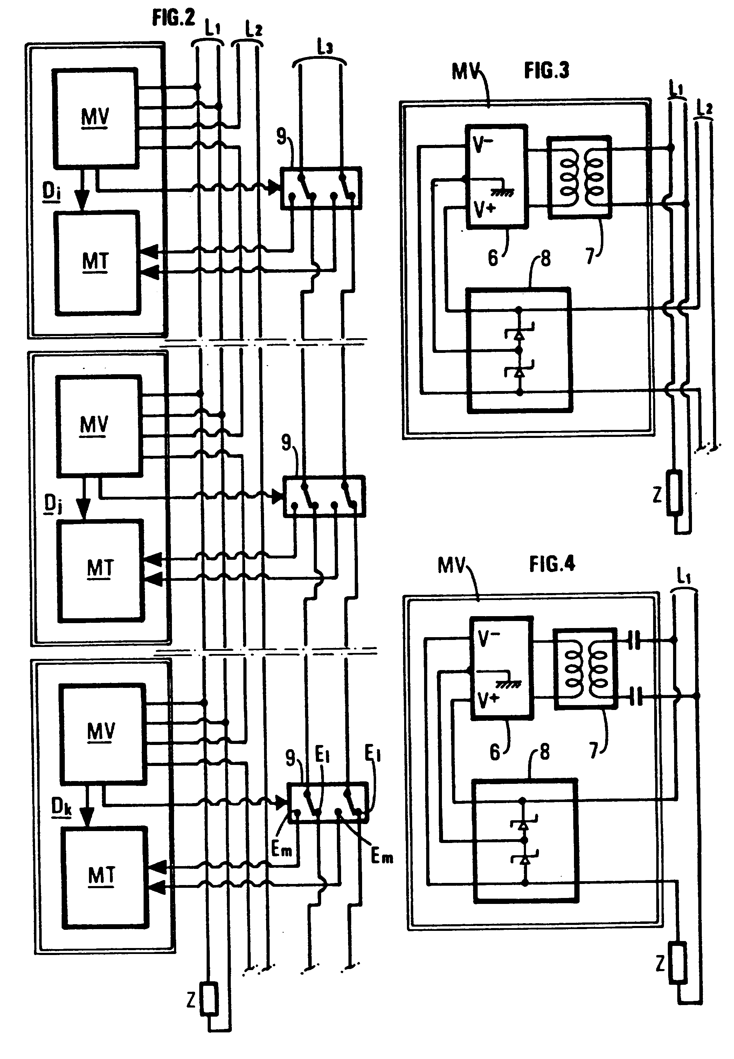

Le schéma de la Fig.2 montre trois dispositifs de puits Di, Dj, Dk (tels que les ensembles de récepteurs Ri, Rj, Rk de la Fig.1), installés à poste fixe dans un puits, derrière un casing ou bien dans l'espace annulaire entre un casing et un tube de production, et à des profondeurs différentes.

Chacun de ces dispositifs comporte deux modules. Un premier module MV est utilisé pour effectuer une veille permanente dans l'attente d'ordres susceptibles à tout moment de leur être transmis par la station en surface. Un deuxième module ou module utilisateur MT, est mis en place pour émettre des signaux vers la station de surface ou pour en recevoir. Suivant le mode de connexion de la Fig.2, les modules MV des différents dispositifs sont connectés en permanence sur une ligne de transmission d'ordres L1 reliée à la station de surface. Par elle, ils recoivent des ordres codés associés à une adresse désignant spécifiquement l'un d'entre eux. Chacun des modules de veille MV comporte un décodeur d'adresse et d'ordres 6 connecté à la ligne L1 par l'intermédiaire d'un transformateur d'isolement 7 et un bloc de régulation électrique 8 pour produire une ou plusieurs tensions d'amplitude controlée V+, V- (5 V ou 15V par exemple), nécessaires au fonctionnement du décodeur d'adresses et d'ordres 6.

Suivant le mode de réalisation des Fig. 2, 3, le bloc de régulation 8 de chacun des modules de veille MV, est connecté à une ligne d'alimentation électrique spécifique L2 connectée dans la station de surface à un générateur de courant. Il produit, dans des diodes zener du bloc 8, une tension électrique suffisante pour l'alimentation du module MV.

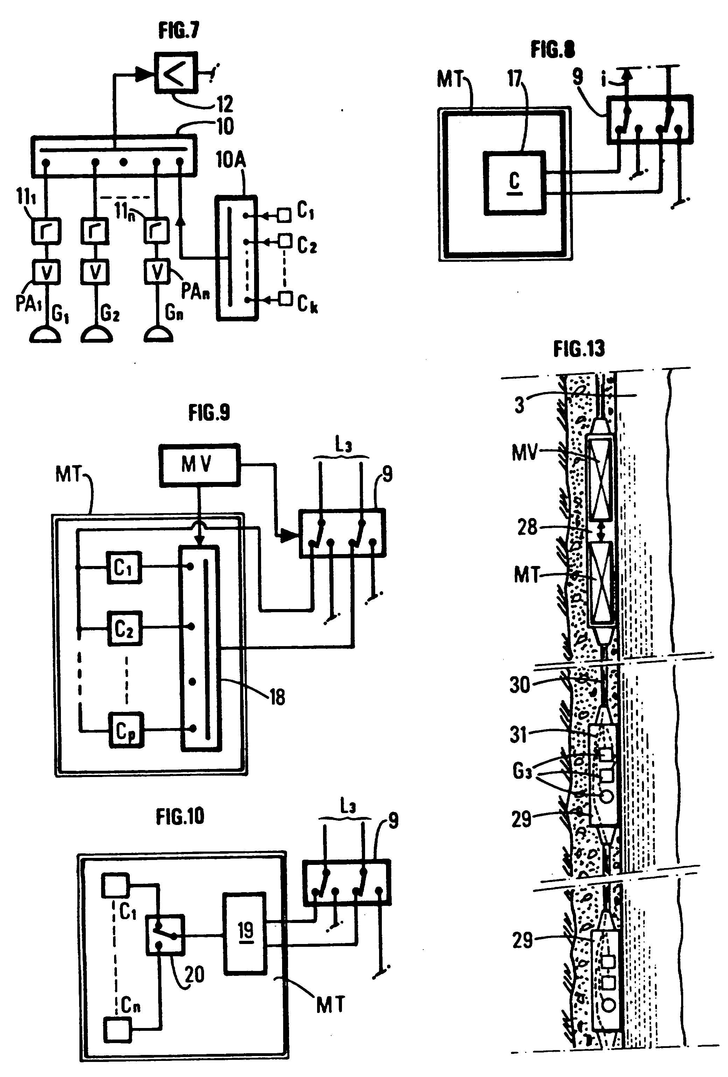

Suivant le mode de réalisation de la Fig.4, la ligne L1 est à usage mixte. Elle est utilisée à la fois pour transporter une intensité de courant pour chaque bloc 8 et pour la transmission des ordres. Dans ce cas, bien évidemment des moyens de découplage sont interposés entre la ligne mixte L1 et le décodeur d'adresses 6. Une troisième ligne L3 est connectée à la station en surface. Sur cette ligne L3, au niveau de chaque module utilisateur MT, est connecté un commutateur 9 (Fig.2) commandé par le décodeur d'adresses 6 du module de veille MV associé. Dans une position de repos, il établit la continuité de la ligne L3. Dans une position de travail, quand il est actionné, chaque commutateur 9 assure la dérivation ou le branchement de la ligne L3 vers le module utilisateur MT. Pour certaines applications, comme on le verra en relation avec la Fig. 10, la ligne L3 peut être alimentée électriquement par la station de surface. Dans ce cas, l'activation d'un commutateur 9 a pour effet de mettre sous tension un module utilisateur MT.

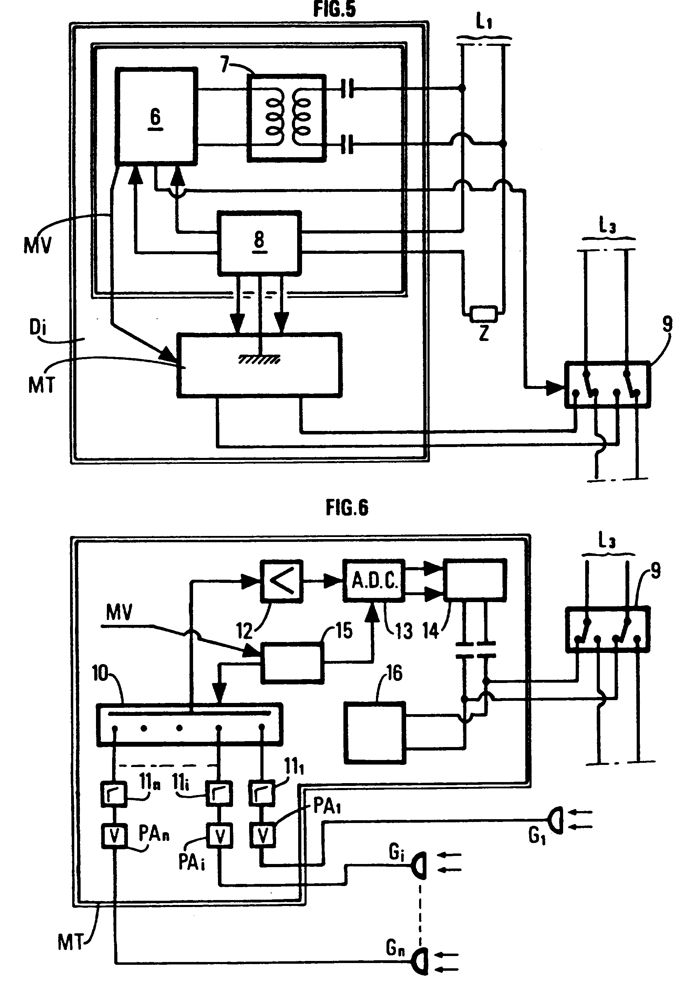

Suivant le mode de réalisation de la Fig.5, lorsque les tensions électriques régulées produites par un bloc d'alimentation 8 conviennent pour le fonctionnement du module utilisateur, on peut établir entre eux une connexion électrique directe commandée par le décodeur d'adresse du module MV.

L'alimentation électrique des modules de veille MV et éventuellement des modules utilisateurs est effectué au moyen d'un générateur de courant, comme le montre les modes de réalisation des Fig. 3, 4. les alimentations électriques peuvent toutefois être effectuées par des générateurs de tension, les modules de veille MV étant connectés en parallèles sur les lignes L1 ou L2 suivant les cas et comportant par exemple des blocs d'alimentation à découpage pour produire les tensions recyclées nécessaires à ces modules.

Suivant les modes de réalisation des Fig. 6, 7, le module utilisateur est un émetteur de signaux numérisés codés. Il comporte par exemple un certain nombre n de récepteurs G1, G2 ... Gn pouvant appartenir à l'un des ensembles Ri, Rj ou Rk (cf. Fig.1). Les signaux captés par les récepteurs G1 à Gn sont appliqués respectivement à des préamplificateurs PA1, PAn à gain fixe ou variable suivis de filtres limiteurs 111 à 11n. Les signaux amplifiés et filtrés sont appliqués à des entrées d'un multiplexeur 10. La sortie de celui-ci est connecté à l'entrée d'un circuit d'acquisition comprenant par exemple un amplificateur à gain commutable automatique 12, un convertisseur analogique-numérique (CAN) 13, un élément de codage 14 pour inclure les mots numériques issus du convertisseur (CAN) dans une trame d'émission et un élément de synchronisation 15 comportant une horloge locale qui est connectée au décodeur d'ordres dans le module de veille MV. De tels circuits sont décrits par exemple dans les brevets FR 2 613 496 et 2 616 230 du demandeur. Le module utilisateur comporte aussi un régulateur de tension 16 produisant des tensions stabilisées pour le fonctionnement du module utilisateur. Dans une application de ce type, la ligne L3 est mise sous tension et le régulateur 16 lui est connecté par l'intermédiaire du commutateur 9. Via le même commutateur 9 et des moyens de découplage, la sortie de l'élément de codage 14 est aussi connecté à la ligne L3.

Si l'on dispose de convertisseur analogique-numérique (CAN) à grande dynamique, on peut éventuellement supprimer l'amplificateur à gain commutable 12, ce qui offre une solution plus économique et plus fiable.

Suivant la variante de la Fig.7, un multiplexeur secondaire 16 peut être également connecté à l'une des voies d'entrée du multiplexeur 10. Aux entrées de ce sous-multiplexeur 10A sont connectés plusieurs capteurs d'état C1, C2, ... Ck adaptés à traduire un signal mesuré en une tension électrique. A intervalles réguliers, fixés par l'élément de synchronisation 15, la tension délivrée par chacun de ces capteurs d'état peut être échantillonnée et transmise à la station de surface via la ligne L3.

Chacun des modules utilisateurs installés dans un puits pour faire de l'acquisition de signaux peut avoir sa fréquence d'horloge propre, adaptée au nombre de récepteurs associé et/ou à la bande passante des signaux captés. Chacun d'eux peut aussi posséder son mode de codage propre.

Le gain de chaque pré-amplificateur 111 à 11n peut être fixe et préréglé avant la mise en place du dispositif dans le puits. Dans certains cas cependant où le niveau des signaux à amplifier dépend de l'application envisagée, on utilise de préférence un pré-amplificateur 111 à 11n dont le gain peut être commuté à la réception d'un ordre spécifique adressé depuis la station de surface au décodeur 6 du module de veille MV associé, et décodé par celui-ci.

Suivant le mode de réalisation de la Fig.8, le module utilisateur peut être aussi un capteur à courant proportionnel d'un type connu 17. Quand ce type de capteur 17 reçoit de la ligne L3 via le commutateur associé 9, une tension électrique définie, il laisse passer un courant proportionnel à la valeur du paramètre qu'il mesure, entre 4mA et 20mA par exemple.

Suivant la variante de la Fig.9, plusieurs capteurs d'état C1, C2, ..., Cp du même type à courant proportionnel, peuvent être connectés au commutateur 9 par l'intermédiaire d'un commutateur intermédiaire 18. Dans ce cas, la station de surface envoie au décodeur d'adresse 6 (Fig. 3, 4) du module de veille associé MV, un ordre adressé désignant le module utilisateur concerné par la commande mais aussi le numéro du capteur d'état C1 à Cp dont on veut connaître la mesure. Le décodage de ce numéro permet d'actionner le commutateur intermédiaire 18.

Le module illustré à la Fig.10, convient pour transmettre des tensions électriques à variations lentes délivrées par des capteurs d'état C1 ... Cm tels que des capteurs de température ou de pression par exemple ou bien encore des débitmètres. Il comporte un oscillateur 19 dont la fréquence varie linéairement en fonction d'une tension de commande (VCO), en l'occurrence, celle délivrée par un de ces capteurs d'états C1 à Cm, cet oscillateur délivrant un signal qui est appliqué à la ligne L3 via le commutateur 9. Quand plusieurs capteurs d'état peuvent commander le même oscillateur (VCO) 19, on les connecte à lui par l'intermédiaire d'un commutateur intermédiaire 20 tel que le commutateur 18 précédent.

La ligne L3 peut être utilisée aussi pour fournir de la puissance électrique à des modules utilisateurs comportant des moyens électromagnétiques tels que des moteurs, des électrovannes etc, qui sont installés à poste fixe dans l'espace annulaire entre un tube de cuvelage et un tube de production par exemple ou éventuellement un moyen quelconque placé à l'extérieur d'un casing. Ces modules sont de même associés chacun à un module de veille MV et alimentés par l'intermédiaire d'un commutateur 9 sur la ligne L3.

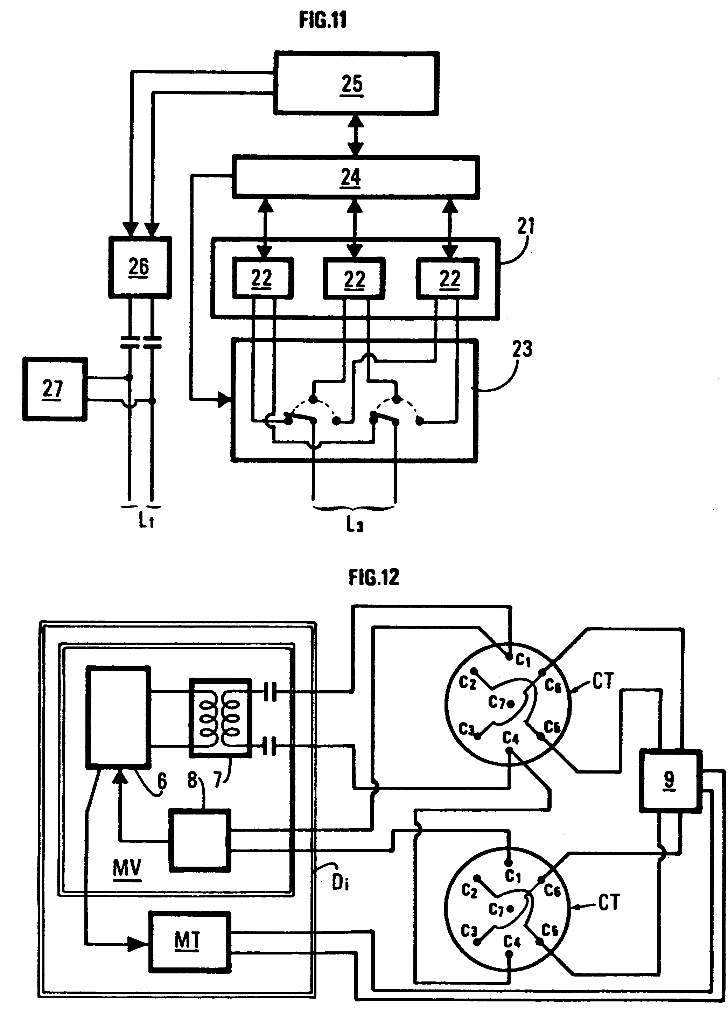

La station de surface (Fig. 11) est adaptée à faire fonctionner un grand nombre d'applications telles que celles définies ci-dessus. Les signaux reçus des modules utilisateurs étant très variés, le principe de fonctionnement retenu est de laisser à celui qui est concerné par un ordre, la libre disposition de la ligne L3 et la maîtrise de la transmission, et d'adapter la station de surface au mode de transmission propre du module activé.

La station de surface comporte un ensemble 21 de plusieurs unités spécialisées 22 et un sélecteur 23 pour connecter à l'une d'elles la ligne L3. Par l'intermédiaire d'une carte électronique d'interface 24, l'ensemble 21 est relié à un processeur 25 tel qu'un micro-ordinateur programmé. La station comporte aussi un codeur d'adresse 26 connecté à la ligne L1 et un générateur de courant électrique 27. Suivant le mode de connexion montré à la Fig.4, le générateur 27 est connecté aussi à la ligne L1. Le processeur 25, sur commande d'un opérateur ou suivant un programme préétabli, envoie des ordres de connexion à un module de veille spécifique MV par la ligne L1, par l'intermédiaire du codeur d'adresse 26. Dans le même temps, il commande la commutation du sélecteur 23 de façon que la ligne L3 soit accordée à l'unité 22 spécialisée et qu'elle puisse communiquer avec le module utilsateur installé dans le puits à l'adresse spécifiée.

Les unités 22 adaptées à la réception des mesures des capteurs à courant proportionnel 17 (Fig.8, 9), comportent chacune par exemple un élément pour transformer l'intensité circulant sur la ligne L3 en un signal indicatif du paramètre mesuré dans le puits par le capteur d'état désigné, cet élément communiquant au processeur 251e signal mesuré.

Les modules utilisateurs tels que ceux des Fig.6 et 7, effectuent des acquisitions de signaux et leur transmission sous le contrôle d'une horloge locale susceptible de dériver en fréquence ou en phase pour des raisons multiples. En conséquence, on utilise pour la réception des signaux numérisés codés issus des modules d'acquisition, des unités 22 adaptées à reconstituer un signal d'horloge en phase avec celui qui rythme la transmission. Une telle unité est décrite par exemple dans la demande de brevet FR 91/13770 déposée par le demandeur. Ces mêmes unités spécialisées comportent dans ce cas un moyen d'alimentation électrique qui est aussi connecté à la ligne L3, de façon à alimenter le régulateur de tension 16 (Fig.6) inclus dans le module d'acquisition de signaux.

Quand le module utilisateur activé comporte un ensemble de capteurs sismiques et son module d'acquisition associé, que l'on utilise dans le cadre d'opérations de prospection sismique avec activation d'une source sismique, le processeur déclenche le réveil du module d'acquisition MT associé avant le déclenchement de la source. Lorsque le processeur recoit le signal TB indicatif du déclenchement de la source, il dépose un marqueur sur les signaux sismiques numérisés reçus par la ligne L3, et il leur associe la valeur de la fréquence d'horloge mesurée par l'unité 22 qui gère l'échange. De cette façon, si l'on doit combiner ensemble des traces sismiques obtenues par des ensembles différents, dans un même puits ou éventuellement dans d'autres puits, on peut auparavant procéder facilement à leur recalage en temps.

Un module spécialisé dans la fourniture d'énergie électrique via les conducteurs L3 à des modules utilisateurs, comporte dans ce cas, un générateur de courant ou de tension électrique.

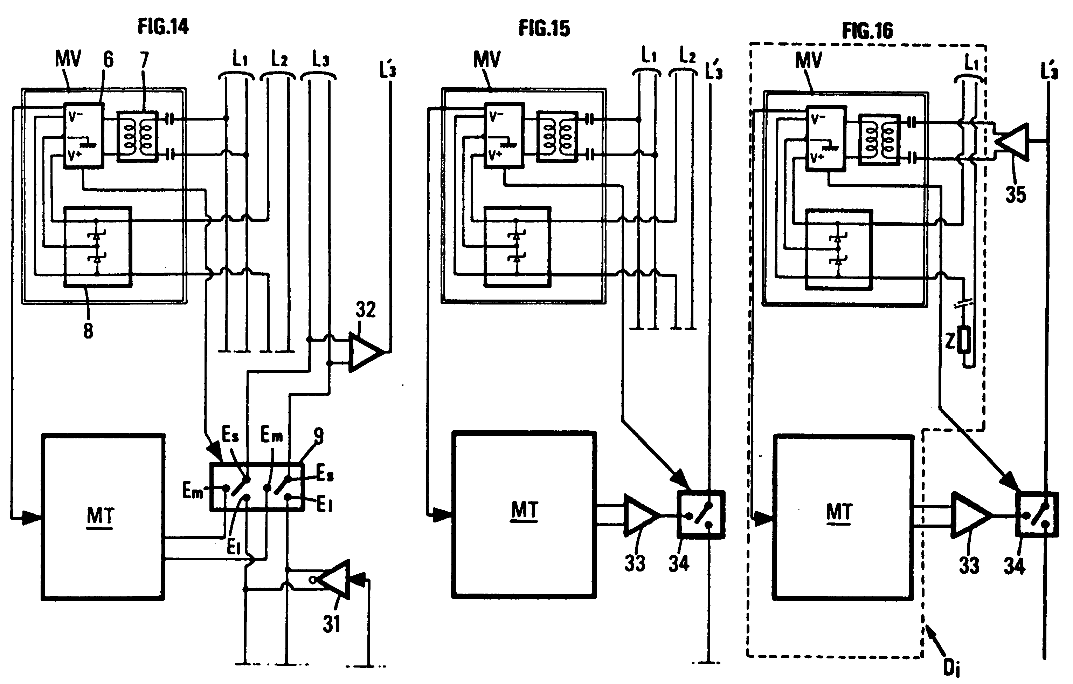

Suivant le mode de réalisation de la Fig.12, le câble utilisé peut être du type heptaconducteurs avec six conducteurs C1 à C6 répartis autour d'un conducteur central C7 et une tresse périphérique CT. Dans ce cas, on peut adopter le mode de connexion indiqué sur cettte Fig. 12 pour chaque dispositif de puits. Aux conducteurs C1 et C4, est connecté l'enroulement primaire du transformateur 7, dans les modules MV, le secondaire de celui-ci étant connecté au détecteur 6 de signaux d'adresse et d'ordres. L'alimentation régulée 8 est connectée en série sur le conducteur C4 par exemple Entre la réunion des conducteurs C2 et C5 d'une part et des conducteurs C3 et C6 d'autre part, est connecté le module utilisateur MT.

Un module électronique d'acquisition de signaux tel que celui des Fig.6, 7 par exemple, peut traiter des signaux d'un ensemble de récepteurs situés dans son voisinage. Il peut cependant être utilisé pour regrouper des signaux issus d'ensembles de récepteurs répartis sur une longueur de puits relativement importantes. A cet effet, le boîtier 28 qui le contient, est relié comme le montre la Fig.13, à un ou plusieurs boîtiers 29 de récepteurs tels que des géophones tri-axiaux, par l'intermédiaire de câbles hydrauliques étanches 30. Les conducteurs électriques 31 des géophones passent le long de ce circuit étanche jusqu'au boîtier électronique MT. Un tel agencement est décrit dans le brevet FR-A-2 685 139 précitée.

Suivant un autre mode de réalisation, les moyens de communication peuvent comporter un ou plusieurs câbles à une seule ligne assurant les fonctions des lignes L1, L2 et L3 précédentes, cette ligne étant constituée par exemple par l'âme du câble et la gaine ou tresse conductrice extérieure de celui-ci.

La séparation des fonctions peut se faire par l'emploi de fréquences différentes. Le courant électrique est du courant continu. Les signaux binaires d'ordre ou de commande sont traduits par des signaux modulés à partir de deux fréquences particulières f₀ et f₁ tandis que les réponses des modules utilisateurs sont traduites par des signaux modulés à partir de deux autres fréquences particulières f₂ et f₃.

La séparation des différentes fonctions peut encore se faire suivant un mode mixte combinant la fréquence et le temps. Les courants d'alimentation sont continus. Les signaux d'ordres ou de commandes sont transmis durant un intervalle de temps suffisant. A la réception de commandes, les modules utilisateurs disposent alors d'un intervalle de temps déterminé pour transmettre les signaux réponses.

L'utilisation d'un câble mono-ligne permet de résoudre plus facilement le problème du passage des liaisons au travers des têtes de puits sous-marines par exemple.

On peut réaliser également toutes les communications entre la station de surface et les ensembles d'intervention le long des puits par un ou plusieurs câbles mixtes comportant chacun des lignes conductrices pour le transfert d'énergie électrique et la transmission des ordres adressés aux modules de veille, et aussi au moins une fibre optique pour le transfert des réponses vers la station de surface, ou bien encore des câbles distincts, les uns comportant des lignes conductrices, les autres incluant des fibres optiques. Par l'emploi de fibres optiques, on peut accroître de façon considérable de débit de données susceptibles d'être transféré vers une station de surface.

Suivant le mode de réalisation de la Fig. 14, la ligne L3 des modes de réalisation de la Fig. 2 est doublée par une fibre optique L'3 pourvue de moyens de couplage optique au niveau de chaque module utilisateur. Ces moyens de couplage comportent par exemple un coupleur optique 31 traduisant les signaux lumineux sur la fibre L'3 en signaux électriques qui sont appliqués au commutateur 9 sur ses entrées EL. Sur les voies de sortie ES du même commutateur 9, est connecté un coupleur 32 inverse du précédent. Il traduit en signaux lumineux les signaux électriques sortant du commutateur 9 et les appliquent sur la fibre L'3. Le module de veille est relié à la surface par deux lignes conductrices L1, L2 (Fig. 2, 3) ou bien une ligne unique à usage mixte (Fig. 4). Ce mode de réalisation mixte convient dans le cas général où le dispositif d'intervention installé dans le puits, comporte des modules utilisateurs MT qui ne deviennent actifs qu'à condition d'être alimentés depuis la surface par une ligne conductrice, et qui ne peuvent être alimentés directement par le bloc d'alimentation tel que le bloc 8 (Fig. 2-4 par exemple) en raison notamment de leur consommation électrique (moteurs électriques, sources acoustiques ou sismiques etc). Dans ce cas, on peut utiliser la ligne L3 notamment pour le transfert d'énergie électrique vers les modules utilisateurs et la ligne L'3 pour le transfert de signaux captés ou mesurés dans le puits vers la station de surface.

Suivant le mode de réalisation de la Fig. 15, toutes les communications entre les modules utilisateurs et la station de surface, sont acheminées entièrement par voie optique au moyen d'au moins une fibre optique L'3. Dans ce cas, le module utilisateur MT est connecté par l'intermédiaire d'un coupleur optique 33 à une entrée d'un commutateur optique 34 interposé sur la fibre optique. Le module de veille est dans ce cas relié à la surface par deux lignes L1, L2 comme déjà décrit. Ce mode de réalisation convient pour les applications où les modules utilisateurs sont des capteurs ou appareils de mesure ayant seulement des données à transmettre vers la station de surface.

Suivant la variante de la Fig. 16, chaque module de vielle MV est connecté sur une ligne d'alimentation électrique permanente L1 et toutes les communications de signaux entre la station de surface et les ensembles d'intervention Di sont acheminées dans les deux sens suivant des modes de transmission différents via une ou plusieurs fibres optiques L'3. Dans ce cas, le décodeur d'adresses de chaque module de veille MV est connecté à la voie L'3 par l'intermédiaire séparateur 35 adapté à isoler les signaux descendants émis dans la station de surface par un générateur tel que le générateur 27 de la Fig. 11 et traduit en signaux optiques par un coupleur optique (non représenté).

Avec les séparateurs et/ou coupleurs optiques appropriés, les voies de transmission optiques précédentes peuvent remplacer les lignes L1 et/ou L3 dans tous les modes de réalisation et d'utilisation du système précédemment décrits en référence aux Fig. 1-13. Les unités spécialisées 22 (Fig. 11) sont alors connectées à la voie optique par des organes de couplage appropriés.

D'une façon générale on peut utiliser des moyens de liaison comportant dans tous les cas au moins une ligne conductrice pour le transfert depuis la station de surface de courants et/ou de signaux et au moins une voie de transmission optique pour le transfert mono ou bi-directionnel de signaux entre cette même station et les ensembles d'intervention Di dans le puits.

On ne sortirait pas du cadre de l'invention en doublant les portions de lignes ou de fibres optiques entre les dispositifs d'intervention successifs pour parer à d'éventuelles défaillances en cas de fuites ou d'envahissement localisées. Avant la mise en oeuvre du système, on peut procéder à la formation de liaisons complètes entre la station de surface et tous les ensembles d'intervention, de la manière indiquée par exemple dans le brevet FR 2 471 088, en interconnectant en série des portions de lignes ou de fibres optiques et à chaque nouvelle portion interconnectée, en testant la qualité de transision sur les voies ainsi allongées.

Le système de surveillance selon l'invention peut être installé à poste fixe derrière un tube de cuvelage et scellé par cimentation. La géométrie d'un tel système est bien entendu immuable. S'il se trouve que pendant la période de surveillance du gisement qui peut parfois durer plusieurs années, on a besoin de faire des mesures ou des relevés à des profondeurs intermédiaires où aucun récepteur approprié n'est implanté, on peut avoir recours à un ou plusieurs ensembles de récepteurs que l'on assujettit à un tube de production descendu à la profondeur d'intervention souhaîtée, à l'extérieur de celui-ci. De préférence, on utilise un agencement tel que celui décrit dans le brevet FR 2 656 034 déposée par le demandeur, qui permet un découplage de l'ensemble de réception par rapport au tube. Un ensemble de transmission à plusieurs lignes tel que celui qui a été décrit plus haut, est employé dans ce cas pour le relier à la station de surface.

Les exemples de récepteurs cités ne sont bien sûr pas limitatifs. On pourra utiliser aussi des capteurs continus de grande longueur installés à poste fixe, permettant de réaliser des filtrages spatiaux des ondes reçues. De tels capteurs sont décrits par exemple dans le brevet FR 2 145 099 du demandeur.

Dans certaines applications où des ensembles d'intervention semblables sont disposés à des emplacements différents le long d'un ou de plusieurs puits pour un certain type d'intervention, le processeur central 25 peut connecter une unité 22 spécialisée dans l'application et commander par des adressages séquentiels la connexion successive de tous les ensembles d'intervention, de manière à enregistrer simultanément leurs réponses. Un tel agencement est utile par exemple dans les applications de surveillance active ou passive où l'on dispose de plusieurs ensembles de récepteurs acoustiques ou sismiques. Ces ensembles de récepteurs peuvent être installés à poste fixe dans un même puits à plusieurs profondeurs différentes. Ils peuvent être installés aussi à poste fixe dans plusieurs puits différents, avec au moins un ensemble de récepteurs dans chacun des puits. La station de surface est reliée aux ensembles de récepteurs de chaque puits par un câble et peut commander par adressage l'acquisition de signaux reçus par tous les récepteurs de tous les ensembles et la centralisation des signaux sous une forme numérisée codée et leur enregistrement par un dispositif d'enregistrement.

On a décrit un exemple de réalisation du système selon l'invention où la station centrale pilotait par adressage et envoi d'ordres spécifiques, l'allocation des conducteurs L3 aux ensembles d'intervention, ceux-ci quand ils disposaient de ces conducteurs, pouvant maîtriser le transfert de données vers la station centrale. On ne sortirait toutefois pas du cadre de l'invention en remplaçant les modules de veille MV précédemment définis par des modules de veille, adaptés à certaines applications spécifiques.

Suivant un premier mode de réalisation particulier, les modules de veille utilisés sont capables à la fin d'un temps d'allocation prédéfini, de former l'adresse d'un autre module de veille connecté sur le même câble. Avec un tel mode de câblage des modules de veille, on obtient sans intervention d'ordres spécifiques émis depuis la surface, une connexion successive automatique de plusieurs ensembles d'intervention sur un câble avec une possibilité de rebouclage ininterrompu des cycles d'adressage. La station de surface peut, dans une telle configuration ne comporter que des moyens d'alimentation électrique des modules de veille et des moyens d'enregistrement des données qui lui sont transmis par les ensembles d'intervention cycliquement connectés.

Suivant un autre mode de réalisation particulier, on peut mettre en place des ensembles d'intervention dont le module de veille est adapté à réagir à au moins deux adresses différentes. L'une est une adresse spécifique qui ne désigne que lui. Au moins une autre désigne plusieurs ensembles d'intervention différents susceptibles de réagir en même temps à un ordre commun qui leur est adressé. Un tel mode de fonctionnement convient par exemple pour des ensembles d'intervention différents pouvant collecter des données de même nature, tels que des ensembles d'acquisition de données sismiques par exemple. Une application possible est l'adressage simultané de plusieurs ensembles d'acquisition MT installés à poste fixe et pourvus de mémoires.

A un même instant la station centrale 4 peut leur envoyer un ordre d'acquisition de signaux reçus et de mémorisation dans la mémoire locale. L'ordre est décodé par les moyens de décodage 6 et transmis aux ensembles MT correspondants. A la fin du processus d'acquisiton, la station centrale peut déclencher, par des adressages spécifiques, la connexion successive de chacun des ensembles utilisateurs ayant mémorisé des données sur les conducteurs de transmission (L3) et le transfert de ces données dans le dispositif d'enregistrement en surface.

On a décrit, en relation avec les Fig.2, 6, 9, 12 par exemple, un mode de branchement des commutateurs 9 qui a pour effet d'allouer la ligne L3 à un seul module utilisateur à la fois. On ne sortirait pas du cadre de l'invention néanmoins, en connectant les commutateurs 9 autrement, pour permettre par exemple l'allocation de la ligne L3 à plus d'un module utilsateur en même temps, pour certaines applications spécifiques.

On ne sortirait pas non plus du cadre de l'invention si on utilise le système selon l'invention pour faire de la prospection sismique en utilisant les vibrations produites en fond de puits par un outil de forage ou une source sismique fixée à une garniture de forage au voisinage d'un outil.

## Revendications

1. Système de surveillance active ou passive d'un gisement souterrain au moyen d'un dispositif d'intervention disposé à poste fixe dans un ou plusieurs puits ou forages (1) traversant ce gisement, comportant des moyens de liaison incluant au moins un câble de liaison (L1, L3, L'3) pour la transmission d'énergie électrique et de signaux, et une station de surface (4) pouvant être connectée auxdits moyens de liaison, caractérisé en ce qu'il comporte au moins un ensemble d'intervention (Di) disposé à poste fixe dans un puits comprenant un module électronique de veille (MV) relié en permanence auxdits moyens de liaison et pourvu de moyens (6) de décodage de signaux d'adresse, un module utilisateur (MT) et des moyens (9, 34) de commutation commandés par les moyens de décodage (6), pour relier par intermittence le module utilisateur (MT) auxdits moyens de liaison.

2. Système selon la revendication 1, caractérisé en ce que les moyens de liaison comportent au moins une ligne conductrice (L1) pour le transfert de signaux de commande vers le module de veille de chaque ensemble d'intervention.

3. Système selon la revendication 1 ou 2, caractérisé en ce que les moyens de liaison comportent au moins une ligne conductrice (L3) et au moins une voie de transfert optique (L'3) pour relier le module utilisateur (MT) de chaque ensemble d'intervention à la surface (Di), le système comportant en outre des moyens de transmission et de couplage bi-directionnels (33-35) de signaux entre la station de surface et chaque ensemble d'intervention (Di) dans le puits coopérant avec la voie de transfert optique.

4. Système selon l'une des revendications 1 à 3, caractérisé en ce qu'il comporte une station de surface (4) connectée auxdits moyens de liaison comprenant au moins des moyens (27) d'alimentation électrique du module de veille de chaque ensemble d'intervention (Di) dans le puits et des moyens d'enregistrement de signaux.

5. Système selon la revendication 4, caractérisé en ce que la station de surface (4) comprend un processeur (24, 25) de commande, des moyens (26, 27) d'application d'énergie électrique sur les conducteurs d'alimentation électrique desdits moyens de liaison et d'application de signaux d'adresse pour activer un module utiliseur (MT) et lui allouer au moins une voie (L3, L'3) de transmission de signaux, et au moins une unité spécialisée (22) pour communiquer par lesdites voies de transmission avec le module utilisateur (MT) activé.

6. Système selon la revendication 1 ou 4, caractérisé en ce que le module utilisateur (MT) d'au moins un ensemble d'intervention (Di) comporte plusieurs récepteurs (G, Ck) tels que des capteurs d'ondes (Gl-Gn) et des moyens (C) de mesure de paramètres d'état (Cl-Ck) connectés auxdits moyens de multiplexage (10, 10A) et une unité (11-16) d'adaptation et de transmission de données incluant des moyens de multiplexage (10, 10A, 18) connectés auxdits récepteurs.

7. Système selon la revendication 6, caractérisé en ce que ladite unité d'adaptation et de transmission comporte des moyens de synchronisation (15) pour engendrer un signal local d'horloge et piloter une numérisation de données produites par lesdits moyens de réception associés (Gl-Gn) ainsi que leur transmission sur au moins une voie (L3, L'3) de transmission de signaux, et la station de surface (4) comporte une unité (22) spécialisée comprenant des moyens automatiques de synchronisation pour restituer un signal d'horloge dont la phase est adaptée à celle dudit signal local d'horloge.

8. Système selon l'une des revendications 1 à 7, caractérisé en ce que le module utilisateur (MT) d'au moins un ensemble d'intervention (Di) comporte au moins un récepteur (17) pour mesurer un paramètre d'état et délivrant en réponse un courant proportionnel sur au moins une voie (L3, L'3) de transmission de signaux via lesdits moyens de commutation (9).

9. Système selon la revendication 8, caractérisé en ce qu'il comporte plusieurs récepteurs (Cl-Cp) pour mesurer des paramètres d'état et délivrant en réponse des courants proportionnels, le module utilisateur (MT) incluant des moyens de sélection (18) commandés par le module électronique de veille associé (MV), pour connecter sélectivement l'un desdits récepteurs (Ci) à ladite voie (L3, L'3) de transmission de signaux via les moyens de commutation (9).

10. Système selon l'une des revendications 1 à 6, caractérisé en ce que le module utilisateur (MT) d'au moins un ensemble d'intervention (Di) comporte au moins un récepteur (Cl-Cn) pour mesurer un paramètre physique et délivrant en réponse une tension électrique, et une unité d'adaptation et de transmission comprenant un oscillateur (19) commandé par tension dont la sortie est connectée sélectivement à au moins une voie (L3, L'3) de transmission de signaux par l'intermédiaire desdits moyens de commutation (9).

11. Système selon l'une des revendications 1 à 6, caractérisé en ce qu'au moins un module utilisateur (MT) comporte des moyens électromécaniques pour transformer de l'énergie électrique en énergie mécanique, ces moyens étant connectés sur commande auxdit moyens de liaison, et la station de surface (4) comporte des moyens délivrant une tension ou un courant électrique.

12. Système selon l'une des revendications 6 ou 7, caractérisé en ce qu'il comporte au moins une source sismique (S1, S2), l'unité spécialisée (22) communiquant avec l'unité d'adaptation et de transmission associée audit ensemble de récepteurs, étant adaptée à déterminer la fréquence du signal d'horloge émis par les moyens de synchronisation (15), et ledit processeur (25) comportant des moyens (24) pour déclencher ladite source et des moyens pour associer aux données reçues de l'unité (MT) d'adaptation et de transmission, un signal indicatif des instants de déclenchement de ladite source sismique.

13. Système selon l'une des revendications 5 à 12, caractérisé en ce qu'il comporte au moins un premier ensemble de récepteurs acoustiques ou sismiques (G) associé à une unité d'adaptation et de transmission et au moins un deuxième ensemble comportant des moyens de mesure (Ck) de différents paramètres, ce deuxième ensemble étant associé à une deuxième unité d'adaptation et de transmission, et une station de surface comportant au moins deux unités spécialisées (22) différentes l'une de l'autre pour communiquer respectivement avec lesdites unités d'adaptation et de transmission, lesdites unités spécialisées étant connectées audit processeur (25) par l'intermédiaire de circuits d'interface (24)

14. Système selon la revendication 4, caractérisé en ce que ladite station de surface (4) comporte des moyens d'adressage en séquence de plusieurs ensembles d'intervention (Di-Dk) installés à poste fixe dans au moins un puits.

15. Système selon la revendication 4, caractérisé en ce que chaque ensemble d'intervention comporte des moyens de décodage (6) capables, en fin d'intervention de former des ordres de connexion adressés à des moyens de décodage (6) d'un autre ensemble d'intervention.

16. Système selon l'une des revendications précédentes, caractérisé en ce que les modules de veille de plusieurs ensembles d'intervention particuliers (Di) comportent des moyens (6) de décodage d'adresse et d'ordres répondant à une première adresse spécifique et à une deuxième adresse commune à tous ces ensembles d'intervention particuliers.

17. Système selon l'une des revendications précédentes, caractérisé en ce que chaque câble comporte une première ligne (L1) pour la transmission de signaux d'adresse et d'ordres à chaque module de veille (MV), une deuxième ligne (L2) pour l'alimentation électrique du module de veille (MV) et une troisième ligne (L3) pour la connexion sélective desdits modules utilisateurs (MT).

18. Système selon l'une des revendications 1 à 17, caractérisé en ce que chaque câble comporte une première ligne (L1) pour la transmission de signaux d'adresse et d'ordres à chaque module de veille (MV) et aussi d'une énergie électrique, et une autre ligne (L3) pour la connexion sélective desdits modules utilisateurs (MT).

19. Méthode pour la surveillance active et/ou passive d'une zone de sous-sol traversée par au moins un forage, au moyen du système selon l'une des revendications 1 à 24, caractérisée en ce qu'elle comporte :
- l'allocation par la station de surface (4) de conducteurs (L3) de transmission de signaux à un ensemble d'intervention (Di) par application sur des conducteurs (L1) du câble de signaux de commande adressés au module électronique de veille (MV) associé, et leur décodage par des moyens de décodage (6) dans celui-ci;
- la commande par ledit module de veille (MV) des moyens de commutation (9) permettant la connexion de module utilisateur activée; et
- le transfert de signaux reçus par ledit ensemble d'intervention (Di) sous le contrôle dudit module utilisateur (MT) et suivant des modalités de transfert déterminés, à une unité spécialisée (22) de la station de surface, adaptée à recevoir lesdits signaux et à se conformer à toutes les modalités caractérisant ledit transfert.

20. Méthode selon la revendication précédente, caractérisée en ce que chaque module utilisateur comportant une unité d'adaptation et de transmission de signaux, on alloue un intervalle de temps de transmission suffisant à cette unité pour le transfert dans l'unité spécialisée (22) de la station de surface, de tous les signaux reçus par l'ensemble de récepteurs (R, G) associé et le déclenchement postérieur d'une source sismique (S1, S2) postérieurement à cette allocation.

21. Méthode selon la revendication 19, caractérisée en ce qu'elle comporte la transmission simultanée à plusieurs ensembles d'intervention, d'ordres pour enregistrer des données reçues à partir d'un même instant initial.

22. Système selon la revendication 12, caractérisé en ce que les moyens de liaison comportent au moins un câble à ligne unique, la station de surface comportant des moyens d'application de courant continu à ladite ligne et des moyens d'application à cette même ligne de signaux spécifiques pour la transmission de signaux selon le sens de leur transmission sur la ligne.

23. Système selon la revendication 22, caractérisé en ce que les moyens d'application de signaux spécifiques comportent des éléments d'émission et de réception de signaux de fréquences différentes.

24. Système selon la revendication 22 ou 23, caractérisé en ce que les moyens d'application de signaux spécifiques comportent des éléments pour allouer des intervalles de temps d'émission différents pour la transmission des signaux selon leur sens de propagation sur la ligne.

## Patentansprüche

1. System zur aktiven oder passiven Überwachung einer unterirdischen Lagerstätte mittels einer Einrichtung zur Eingriffnahme, die an einer festen Stelle in einem oder mehreren Bohrlöchern oder Bohrungen (1), welche diese Lagerstätte durchqueren, angeordnet ist, umfassend Einrichtungen zur Verbindung, die wenigstens ein Verbindungskabel (L1, L3, L'3) zur Übertragung von elektrischer Energie und von Signalen einschließen, und eine Oberlächenstation (4), die mit den Einrichtungen zur Verbindung verbunden sein kann, dadurch gekennzeichnet, daß es wenigstens eine Gesamtheit (Di) zur Eingriffnahme, die an einer festen Stelle in einem Bohrloch angeordnet ist, welche ein elektronisches Überwachungsmodul (MV), welches ständig mit den Einrichtungen zur Verbindung verbunden ist und mit einer Einrichtung (6) zur Decodierung von Adressensignalen versehen ist, ein Benutzermodul (MT) und Einrichtungen (9, 34) zur Kommutation, die durch die Einrichtungen (6) zur Decodierung gesteuert sind, um das Benutzermodul (MT) mit den Einrichtungen zur Verbindung vorübergehend zu verbinden, umfaßt.

2. System nach Anspruch 1, dadurch gekennzeichnet, daß die Einrichtungen zur Verbindung wenigstens eine leitfähige Leitung (L1) für die Übertragung von Steuersignalen zu dem Überwachungsmodul jeder Einheit zur Eingriffnahme umfassen.

3. System nach Anspruch 1 oder 2, dadurch gekennzeichnet, daß die Einrichtungen zur Verbindung wenigstens eine leitfähige Leitung (L3) und wenigstens einen optischen Übertragungsweg (L'3), um das Benutzermodul (MT) von jeder Einheit (Di) zur Eingriffnahme mit der Oberfläche zu verbinden, umfassen, wobei das System außerdem Einrichtungen (33-35) zur Übertragung und zur zweiseitigen Kopplung von Signalen zwischen der Oberflächenstation und jeder Einheit (Di) zur Eingriffnahme in den Bohrlöchern, die mit dem optischen Übertragungsweg zusammenarbeiten, umfaßt.

4. System nach einem der Ansprüche 1 bis 3, dadurch gekennzeichnet, daß es eine Oberflächenstation (4) umfaßt, die mit den Einrichtungen zur Verbindung verbunden ist, welche wenigstens eine Einrichtung (27) zur Stromversorgung des Überwachungsmoduls von jeder Einheit (Di) zur Eingriffnahme in den Bohrlöchern und von Einrichtungen zur Aufzeichnung von Signalen umfaßt.

5. System nach Anspruch 4, dadurch gekennzeichnet, daß die Oberflächenstation (4) einen Prozessor (24, 25) zur Steuerung, Einrichtungen (26, 27) zur Anwendung von elektrischer Energie auf die Leiter zur Stromversorgung der Einrichtungen zur Verbindung und zur Anlegung von Adressensignalen, um ein Benutzermodul (MT) zu aktivieren und ihm wenigstens einen Weg (L3, L'3) zur Übertragung von Signalen zuzuweisen, und wenigstens eine spezialisierte Einheit (22), um über die Übertragungswege mit dem aktivierten Benutzermodul (MT) zu kommunizieren, umfaßt.

6. System nach Anspruch 1 oder 4, dadurch gekennzeichnet, daß das Benutzermodul (MT) der wenigstens einen Einheit (Di) zur Eingriffnahme mehrere Empfänger (G, Ck), wie Wellenempfänger (G1-Gn) und Einrichtungen (C) zur Messung von Zustandsparametern (C1-Ck), die mit Einrichtungen (10, 10A) zum Multiplexing verbunden sind, und eine Einheit (11-16) zur Anpassung und zur Übertragung von Daten, welche die mit den Empfängern verbundenen Einrichtungen (10, 10A, 18) zum Multiplexing einschließt, umfaßt.

7. System nach Anspruch 6, dadurch gekennzeichnet, daß die Einheit zur Anpassung und zur Übertragung eine Einrichtung (15) zur Synchronisierung umfaßt, um ein lokales Taktsignal zu erzeugen und eine Digitalisierung von durch die verbundenen Einrichtungen (G1-Gn) zum Empfang erzeugten Daten sowie deren Übertragung auf wenigstens einem Weg (L3, L'3) zur Übertragung von Signalen zu steuern, und die Oberflächenstation (4) eine spezialisierte Einheit (22) umfaßt, die automatische Einrichtungen zur Synchronisierung umfaßt, um ein Taktsignal zu rekonstruieren, dessen Phase auf diejenige des lokalen Taktsignals angepaßt ist.

8. System nach einem der Ansprüche 1 bis 7, dadurch gekennzeichnet, daß das Benutzermodul (MT) der wenigstens einen Einheit (Di) zur Eingriffnahme wenigstens einen Empfänger (17) umfaßt, um einen Zustandsparameter zu messen und in Antwort einen proportionalen Strom über wenigstens einen Weg (L3, L'3) zur Übertragung von Signalen über die Einrichtung (9) zur Kommutation zu liefern.

9. System nach Anspruch 8, dadurch gekennzeichnet, daß es mehrere Empfänger (C1-Cp) umfaßt, um Zustandsparameter zu messen und in Antwort proportionale Ströme zu liefern, wobei das Benutzermodul (MT) Einrichtungen (18) zur Auswahl einschließt, welche durch das verbundene elektronische Überwachungsmodul (MV) gesteuert sind, um einen der Empfänger (Ci) mit dem Weg (L3, L'3) zur Übertragung von Signalen über die Einrichtungen (9) zur Kommutation selektiv zu verbinden.

10. System nach einem der Ansprüche 1 bis 6, dadurch gekennzeichnet, daß das Benutzermodul (MT) der wenigstens einen Einheit (Di) zur Eingriffnahme wenigstens einen Empfänger (C1-Cn), um einen physikalischen Parameter zu messen und in Antwort eine elektrische Spannung zu liefern, sowie eine Einheit zur Anpassung und zur Übertragung, die einen spannungsgesteuerten Oszillator (19) umfaßt, dessen Ausgang mit wenigstens einem Weg (L3, L'3) zur Übertragung von Signalen unter Zwischenschaltung der Einrichtungen (9) zur Kommutation selektiv verbunden ist, umfaßt.

11. System nach einem der Ansprüche 1 bis 6, dadurch gekennzeichnet, daß wenigstens ein Benutzermodul (MT) elektromechani sche Einrichtungen umfaßt, um die elektrische Energie in mechanische Energie umzuwandeln, wobei diese Einrichtungen über Steuerung mit den Einrichtungen zur Verbindung verbunden sind, und die Oberflächenstation (4) Einrichtungen umfaßt, welche eine Spannung oder einen elektrischen Strom liefern.

12. System nach einem der Ansprüche 6 oder 7, dadurch gekennzeichnet, daß es wenigstens eine seismische Quelle (S1, S2) umfaßt, wobei die spezialisierte Einheit (22) mit der Einheit zur Anpassung und zur Übertragung kommuniziert, die mit der Gesamtheit von Empfängern verbunden ist, welche geeignet ist, die Frequenz des durch die Einrichtungen (15) zur Synchronisierung ausgesendeten Taktsignals zu bestimmen, und wobei der Prozessor (25) Einrichtungen (24), um die Quelle auszulösen, sowie Einrichtungen, um ein Auslösungszeitpunkte der seismischen Quelle anzeigendes Signal mit den von der Einheit (MT) zur Anpassung und zur Übertragung erhaltenen Daten zu verbinden, umfaßt.

13. System nach einem der Ansprüche 5 bis 12, dadurch gekennzeichnet, daß es wenigstens eine erste Gesamtheit von akustischen oder seismischen Empfängern (G), die mit einer Einheit zur Anpassung und zur Übertragung verbunden ist, sowie wenigstens eine zweite Gesamtheit umfaßt, die Einrichtungen (Ck) zur Messung von verschiedenen Parametern umfaßt, wobei diese zweite Gesamtheit mit einer zweiten Einheit zur Anpassung und zur Übertragung verbunden ist, und eine Oberflächenstation wenigstens zwei, zueinander unterschiedliche spezialisierte Einheiten (22) umfaßt, um mit den Einheiten zur Anpassung und zur Übertragung entsprechend zu kommunizieren, wobei die spezialisierten Einheiten mit dem Prozessor (25) unter Zwischenschaltung von Schnittstellenschaltkreisen (24) verbunden sind.

14. System nach Anspruch 4, dadurch gekennzeichnet, daß die Oberflächenstation (4) Einrichtungen zur Adressierung in Folge von mehreren Einheiten (Di-Dk) zur Eingriffnahme umfaßt, die an einer festen Stelle in wenigstens einem Bohrloch angeordnet sind.

15. System nach Anspruch 4, dadurch gekennzeichnet, daß jede Einheit zur Eingriffnahme Einrichtungen (6) zur Decodierung umfaßt, die geeignet sind, am Ende einer Eingriffnahme Befehle zur Verbindung zu bilden, welche an Einrichtungen (6) zur Decodierung einer anderen Einheit zur Eingriffnahme adressiert sind.

16. System nach einem der vorhergehenden Ansprüche, dadurch gekennzeichnet, daß die Überwachungsmodule von mehreren bestimmten Einheiten (Di) zur Eingriffnahme Einrichtungen (6) zur Adressen- und Befehlsdecodierung umfassen, die auf eine erste spezifische Adresse und eine zweite für alle diese besonderen Einheiten zur Eingriffnahme gemeinsame Adresse ansprechen.

17. System nach einem der vorhergehenden Ansprüche, dadurch gekennzeichnet, daß jedes Kabel eine erste Leitung (L1) zur Übertragung von Adressen- und Befehlssignalen an jedes Überwachungsmodul (MV), eine zweite Leitung (L2) zur Stromversorgung des Überwachungsmoduls (MV) und eine dritte Leitung (L2) zur selektiven Verbindung der Benutzermodule (MT) umfaßt.

18. System nach einem der Ansprüche 1 bis 17, dadurch gekennzeichnet, daß jedes Kabel eine erste Leitung (L1) zur Übertragung von Adressen- und Befehlssignalen an jedes Überwachungsmodul (MV) und auch von einer Stromversorgung sowie eine weitere Leitung (L3) zur selektiven Verbindung der Benutzermodule (MT) umfaßt.

19. Verfahren zur aktiven und/oder passiven Überwachung einer Untergrundzone, die durch wenigstens eine Bohrung durchquert ist, mittels eines Systems gemäß einem der Ansprüche 1 bis 24, dadurch gekennzeichnet, daß es umfaßt:
- die Unterstützung durch die Oberflächenstation (4) von Leitern (L3) zur Übertragung von Signalen an eine Einheit (Di) zur Eingriffnahme durch Anlegung von Steuersignalen, die an ein verbundenes elektronisches Überwachungsmodul (MV) adressiert sind, auf Leiter (L1) des Kabels, und deren Decodierung durch Einrichtungen (6) zur Decodierung in diesem,
- die Steuerung durch das Überwachungsmodul (MV) von Einrichtungen (9) zur Kommutation, welche die Verbindung mit einem aktivierten Benutzermodul gestatten, und
- die Übertragung von Signalen, die durch die Einheit (Di) zur Eingriffnahme erhalten sind, unter der Steuerung des Benutzer moduls (MT) sowie entsprechend bestimmter Übertragungsmodalitäten an eine spezialisierte Einheit (22) der Oberflächenstation, welche geeignet ist, die Signale zu empfangen und sich nach sämtlichen Modalitäten, welche die Übertragung charakterisieren, richtet.

20. Verfahren nach dem vorhergehenden Anspruch, dadurch gekennzeichnet, daß jedes Benutzermodul eine Einheit zur Anpassung und zur Übertragung von Signalen umfaßt, wobei man dieser Einheit ein ausreichendes Übertragungszeitintervall für die Übertragung von sämtlichen durch die verbundene Gesamtheit (R, G) von Empfängern erhaltenen Signalen und die spätere Auslösung einer seismischen Quelle (S1, S2) nachträglich zu dieser Unterstützung von der Oberflächenstation in die spezialisierte Einheit (22) zuweist.

21. Verfahren nach Anspruch 19, dadurch gekennzeichnet, daß es die gleichzeitige Übertragung von Befehlen an mehrere Einheiten zur Eingriffnahme umfaßt, um erhaltene Signale auf der Grundlage eines gleichen Anfangszeitpunktes aufzuzeichnen.

22. System nach Anspruch 12, dadurch gekennzeichnet, daß die Einrichtungen zur Verbindung wenigstens ein Kabel mit Einzelleitung umfassen, wobei die Oberflächenstation Einrichtungen zur Anlegung von kontinuierlichem Strom an die Leitung und Einrichtungen zur Anlegung von spezifischen Signalen an diese gleiche Leitung für die Übertragung von Signalen gemäß der Richtung ihrer Übertragung über die Leitung umfaßt.

23. System nach Anspruch 22, dadurch gekennzeichnet, daß die Einrichtungen zur Anlegung von spezifischen Signalen Elemente zum Senden und zum Empfangen von Signalen verschiedener Frequenzen umfassen.

24. System nach Anspruch 22 oder 23, dadurch gekennzeichnet, daß die Einrichtungen zur Anlegung von spezifischen Signalen Elemente umfassen, um unterschiedliche Sendezeitintervalle für die Übertragung von Signalen gemäß ihrer Übertragungsrichtung über die Leitung zuzuweisen.

## Claims

1. System for active or passive monitoring of an underground deposit located in a fixed position in one or several wells or bores (1) crossing through this deposit, comprising linking means including at least one linking cable (L1, L3, L'3) for conveying electrical energy and signals, and a surface station (4) that can be connected to the said linking means, characterised in that it comprises at least one operating unit (Di) located at a fixed position in a well comprising an electronic monitoring module (MV) permanently connected to the said linking means and provided with means (6) for decoding address signals, a user module (MT) and switching means (9, 34) controlled by the decoding means (6) to link the user module (MT) intermittently to the said linking means.

2. System as claimed in claim 1, characterised in that the linking means have at least one conducting line (L1) for the transfer of command signals to the monitoring module of each operating unit.

3. System as claimed in claim 1 or 2, characterised in that the linking means have at least one conducting line (L3) and at least one optical transfer channel (L'3) to link the user module (MT) of each operating unit to the surface station (Di), the system having in addition means for the transmission and two-way coupling (33-35) of signals between the surface station and each operating unit (Di) in the well, co-operating with the optical transfer channel.

4. System as claimed in one of claims 1 to 3, characterised in that it comprises a surface station (4) connected to the said linking means comprising at least power supply means (27) for the monitoring module of each operating unit (Di) in the well and signal recording means.

5. System as claimed in claim 4, characterised in that the surface station (4) has a control processor (24,, 25), means for applying electrical energy to the power supply lines of the said linking means and applying address signals to activate a user module (MT) and allocate to it at least one signal transmission channel (L3, L'3), and at least one specialised unit (22) for linking the said transmission channels with the activated user module (MT).

6. System as claimed in claim 1 or 4, characterised in that the user module (MT) of at least one operating unit (Di) has several receivers (G, Ck), such as wave sensors (G1-Gn) and means (C) for measuring status parameters (C1-Ck), connected to the said multiplexing means (10, 10A) and a data adaptation and transmission unit (11-16) incorporating the multiplexing means (10, 10A, 18) connected to the receivers.

7. System as claimed in claim 6, characterised in that the said adaptation and transmission unit has synchronisation means (15) for generating a local clock signal and handling digitisation of the data produced by the assigned receiving means (G1-Gn) as well as transmitting them on at least one signal transmission channel (L3, L'3), and the surface station (4) has a specialised unit (22) comprising automatic synchronisation means for reconstituting a clock signal whose phase matches that of the local clock signal.

8. System as claimed in one of claims 1 to 7, characterised in that the user module (MT) of at least one operating unit (Di) has at least one receiver (17) for measuring a status parameter and issuing in response a proportional current on at least one signal transmission line (L3, L'3) via the said switching means (9).

9. System as claimed in claim 8, characterised in that it comprises several receivers (C1-Cp) for measuring status parameters and issuing proportional currents in response, the user module (MT) incorporating selection means (18) controlled by the assigned electronic monitoring module (MV) to connect selectively one of the said receivers (Ci) to the said signal transmission channel (L3, L'3) via the switching means (9).

10. System as claimed in one of claims 1 to 6, characterised in that the user module (MT) of at least one operating unit (Di) has at least one receiver (C1-Cn) to measure a physical parameter and issue in response an electric voltage, and an adaptation and transmission unit comprising a voltage controlled oscillator (19) whose output is selectively connected to at least one signal transmission channel (L3, L'3) via the said switching means (9).

11. System as claimed in one of claims 1 to 6, characterised in that at least one user module (MT) has electro-mechanical means for converting the electrical energy into mechanical energy, these means being connected on command to the said linking means, and in that the surface station ((4) has means for supplying a voltage or electric current.

12. System as claimed in one of claims 6 or 7, characterised in that it comprises at least one seismic source (S1, S2), the specialised unit (22) communicating with the adaptation and transmission unit assigned to the said array of receivers being adapted to determine the frequency of the clock signal emitted by the synchronisation means (15), and the said processor 25 having means (24) to trigger the said source and means to assign to the data received from the adaptation and transmission unit (MT) a signal indicative of the instants at which the seismic source was triggered.

13. System as claimed in one of claims 5 to 12, characterised in that it comprises at least a first array of acoustic or seismic receivers (G) assigned to an adaptation and transmission unit and at least a second array having means for measuring (Ck) different parameters, this second array being assigned to a second adaptation and transmission unit, and a surface station having at least two different specialised units (22) for communicating respectively with the said adaptation and transmission units, the said specialised units being connected to the said processor (25) via interface circuits (24).

14. System as claimed in claim 4, characterised in that the said surface station (4) has means for addressing in sequences several operating units (Di-Dk) installed in a fixed position in at least one well.

15. System as claimed in claim 4, characterised in that each operating unit has decoding means (6) that are capable, at the end of the operation, of formulating connection commands addressed to the decoding means (6) of another operating unit.

16. System as claimed in one of the previous claims, characterised in that the monitoring modules of several individual operating units (Di) have address and command decoding means (6) responding to a first individual address and a second address common to all the individual operating units.

17. System as claimed in one of the previous claims, characterised in that each cable has a first line (L1) for transmitting address and command signals to each monitoring module (MV), a second line (L2) for supplying the monitoring module (MV) with power and a third line (L3) providing selective connection with the said user modules (MT).

18. System as claimed in one of claims 1 to 17, characterised in that each cable has a first line (L1) for transmitting address and command signals to each monitoring module (MV) as well as a power supply, and another line (L3) for providing selective connection with the said user modules (MT).

19. Method of active and/or passive monitoring of an underground zone through which at least one bore passes, using the system as claimed in one of claims 1 to 24, characterised in that it consists of:
- the allocation by the surface station (4) of signal transmission lines (L3) to an operating unit (Di) by applying to the conductors (L1) of the cable command signals addressed to the assigned electronic monitoring module (MV) and decoding thereof by the decoding means (6) therein;
- command by the said monitoring module (MV) of the switching means (9) enabling the activated user module to be connected; and
- transfer of the signals received by the said operating unit (Di), under the control of the user module (MT) and in accordance with the given transfer conditions, to a specialised unit (22) at the surface station, adapted to receive the said signals and to comply with the conditions governing the said transfer.

20. Method as claimed in the previous claim, characterised in that, each user module having a signal adaptation and transmission unit, a sufficient transmission period is allocated to this unit for it to transfer to the specialised unit (22) at the surface station all the signals received by the assigned array of receivers (R, G) and a seismic source (S1, S2) is subsequently triggered after this allocation has been completed.

21. Method as claimed in claim 19, characterised in that it comprises the simultaneous transmission to several operating units of commands to record data received from a same initial instant.

22. System as claimed in claim 12, characterised in that the linking means have at least one single line cable, the surface station having means for applying direct current to the said line and means for applying to this same line specific signals for the transmission of signals depending on the direction in which they are being transmitted on the line.

23. System as claimed in claim 22, characterised in that the means for applying specific signals have signal emitting and receiving elements for different frequencies.

24. System as claimed in claim 22 or 23, characterised in that the means for applying specific signals have elements for allocating different emission periods for transmitting signals depending on the direction in which they are being propagated along the line.
